# EUROPEAN PATENT APPLICATION

(11) **EP 1 433 763 A1**
(43) Date of publication of application: **30.06.2004**
(21) Application number: 03029340.1
(22) Date of filing: 19.12.2003
(51) Int. Cl.: C03C 17/30, C09D 183/08, C09K 3/18

(54) **Transference-less water-repellent film**

(30) Priority: 26.12.2002 JP 2002378153
(71) Applicant: Nippon Sheet Glass Co., Ltd., Osaka-shi, Osaka 541-8559 (JP)
(72) Inventor:
(74) Representative: Gille Hrabal Struck Neidlein Prop Roos

(57) **Abstract**

A transference-less water-repellent film inhibiting an occurrence of transferring a water-repellent component via a glass-handling tool that contacts with the water-repellent film comprises: (A) silicon alkoxide or its hydrolyzate in an amount of from 0.05 mass % to 0.20 mass % as converted to silica; (B) silane compounds with fluoroalkyl group in an amount of from 0.001 mass % to 0.003 mass % as converted to silica; (C) acid in an amount of (from 0.01 to 0.30)/(degree of acidity) mol/liter; (D) water in an amount of from 0.5 mass % to 2.0 mass %; and (E) alcoholic solvent in an amount of the residue. A transference-less water-repellent film by making the operation of both adhering the tacky film and applying the surfactant unnecessary and inhibiting both the increase of the numbers of the process and the augmentation of the environmental load by means of giving the transference-lessness to the water-repellent film itself is achieved.

## Description

### TECHNICAL FIELD

The present invention relates to a water-repellent film formed on the surface of a substrate that reveals anti-transferring property. More particularly, the present invention relates to a transference-less water-repellent film preventing a transferring of a water-repellent component by means of handling tools regarding the water-repellent film formed by applying a liquid composition for the water-repellent film over the surface of a substrate, and by drying.

### BACKGROUND ART

With the aim of providing a substrate such as glass sheet, etc., with water-repellency, it is frequent to form a water-repellent film over the surface of the substrate. Japanese Laid-Open Patent Application No. 2001-172417A discloses a water-repellent film formed by applying a water-repellent coating liquid composition comprising silicon alkoxide or its hydrolyzate, silane compounds containing fluoroalkyl group, and acid dissolved in a solvent over the surface of a substrate and by drying. Such a water-repellent treatment is particularly popular with regard to a window glass for automobiles.

Generally, on a production line of automobiles, automobiles of a variety of types or specifications are produced. Consequently, various window glass sheets, e.g., glass sheets having water-repellent film and ordinary glass sheets without water-repellent film, are supplied onto the line.

A glass-article-handling tool with suction-chuck structure commonly handles these window glass sheets. When the glass-article-handling tool handles the window glass sheet, the water-repellent composition may adhere to the surface of the tool because the tool adsorbs the foregoing water-repellent film. Subsequently, upon handling of an ordinary window glass sheet (without the water-repellent film) with the same glass-article handling tool, the adhered water-repellent composition transfers, in other words, re-adheres, to the ordinary window glass sheet. Such a transference phenomena invites various problems not only degrading the quality of the water-repellent film but also requiring troublesome work for removing the unnecessary water-repellent component that adhered to the ordinary window glass sheet.

As a countermeasure for overcoming the foregoing problems, adhering a tacky film over the surface of the water-repellent film was proposed for the prevention of the transference. Further, Japanese Laid-Open Patent Application No. 2002-529355A discloses a glass article provided with a water-repellent film wherein a surfactant coating film removable with water over itself is formed.

However, adhering the tacky film for the prevention of the transference requires not only the increase of the numbers of operations such as film adhering operation and film separating operation after the handling, but also a disposal of the film after the use. Augmentation of the disposed waste quantity is a serious problem particularly in consideration of the current environmental countermeasures.

Further, applying the surfactant requires an increase of the coating process, an installation of removal process (a water shower), and a treatment of the wastewater contaminated with the surfactant.

### DISCLOSURE OF THE INVENTION

It is an object of the present invention to provide a transference-less water-repellent film by making the operation of both adhering the tacky film and applying the surfactant unnecessary and inhibiting both the increase of the numbers of the process and the augmentation of the environmental load by means of giving the transference -lessness to the water-repellent film itself.

The inventor of the present invention, etc., were in charge of the research and development of the water-repellent film for a long time, and developed a water-repellent film both being improved of the rolling characteristic of the water drop over the film by raising the surface smoothness and having an elevated scratch-resistant property and antiweatherability by raising the sticking force with the substrate. It is a water-repellent film formed by applying a water-repellent coating liquid composition comprising silicon alkoxide or its hydrolyzate, silane compounds containing fluoroalkyl group, and acid dissolved in a solvent over the surface of a substrate and by drying. Further, in the advanced technology development, it was found that the specified coating liquid composition reveals a transference-lessness (in other words, the character without the occurrence of transferring) to say nothing about the water-repellency. The present invention has been accomplished on the basis of the findings and information about the foregoing phenomena.

The present invention proposes a transference-less water-repellent film inhibiting an occurrence of transferring a water-repellent component via a glass handling tool that contacts with the water-repellent film formed by applying a water-repellent coating liquid composition comprising silicon alkoxide or its hydrolyzate, silane compounds containing fluoroalkyl group, and acid dissolved in a solvent over the surface of a substrate and by drying, wherein the water-repellent coating liquid composition comprises:
(A) silicon alkoxide or its hydrolyzate in an amount of from 0.05 mass % to 0.20 mass % as converted to silica;
(B) silane compounds with fluoroalkyl group in an amount of from 0.001 mass % to 0.003 mass % as converted to silica;
(C) acid in an amount of (from 0.01 to 0.30)/(degree of acidity) mol/liter;
(D) water in an amount of from 0.5 mass % to 2.0 mass %; and
(E) alcoholic solvent in an amount of the residue.

The concentration of the fluorine at the surface of the water-repellent film is preferable to be from 0.8 to 1.2 expressed as a ratio between fluorine atoms and silicon atoms in the present invention. When the ratio between (B) silane compounds containing fluoroalkyl group and (A) silicon alkoxide or its hydrolyzate is too small, the water-repellency of the water-repellent film degrades. On the contrary, when the foregoing ratio is too large, a mechanical durability of the water-repellent film degrades. Accordingly, the ratio between fluorine atoms and silicon atoms in the water-repellent film is preferable to be within the foregoing range.

Additionally, the present invention proposes a water-repellent film coated article covered by the transference-less water-repellent film. Various articles may be suggested as the water-repellent film coated articles according to the present invention, and among these, typical examples include window glasses for automobiles. They are formed by applying the foregoing water-repellent coating liquid composition over the surface of the glass sheet and by drying.

### THE MOST PREFERRED EMBODIMENT TO CARRY OUT THE INVENTION

The water-repellent film in accordance with the present invention employs a water-repellent liquid coating composition comprising:
(A) silicon alkoxide or its hydrolyzate in an amount of from 0.05 mass % to 0.20 mass % as converted to silica;
(B) silane compounds with fluoroalkyl group in an amount of from 0.001 mass % to 0.003 mass % as converted to silica;
(C) acid in an amount of (from 0.01 to 0.30)/(degree of acidity) mol/liter;
(D) water in an amount of from 0.5 mass % to 2.0 mass %; and
(E) alcoholic solvent in an amount of the residue.

Then a water-repellent film is formed by applying the water-repellent liquid coating composition over the surface of the substrate and by drying. The water-repellent film obtained above reveals transference -lessness and inhibits an occurrence of transferring the water-repellent component even after being adsorbed by a glass- article -handling tool with suction-chuck structure, which, in turn, adsorbs an ordinary glass sheet.

The reason why the transferring, or re-adhcrence, of the water-repellent component occurred during the handling in the prior art is considered that there were an excess of water-repellent component in surplus. In other words, because there are numbers of silane compounds containing fluoroalkyl group and revealing water-repellency in surplus as compared with the numbers of chemical combination sites over the surface of the glass or over the substrate, the surplus does not couple chemically but is supposed to only adsorb physically with the surface by weak force: van der Waals force. Therefore, a strong force over the surface of the water-repellent film caused by the handling tool with suction chuck, etc., easily induces adherence of the excess water-repellent component to the handling tool, thereby allowing the transferring, or re-adherence, when the handling tool handles other articles. In the present invention, however, the number of silane compounds containing fluoroalkyl group and revealing water-repellency is optimized as against the number of chemical combination sites over the surface of the substrate. Accordingly, because the water-repellent components existing over the surface are entirely present by chemical coupling, the transferring would not occur with the absence of the excess water-repellent component.

Specifically, the amount of the silicon alkoxide or its hydrolyzate is settled in the range of from 0.05 mass % to 0.20 mass % as converted to silica exactly as described above. When the amount of addition exceeds the foregoing range, it causes disadvantage of reducing a mechanical durability because in spite of increasing the number of reaction sites, the film thickness also increases simultaneously. On the contrary, when the amount of addition is under the foregoing range, it causes disadvantage of reducing the water-repellency of itself because, in spite of ensuring the mechanical strength due to the decrease of the film thickness, the number of reaction sites decreases.

The amount of the silane compounds with fluoroalkyl group is settled in the range of from 0.001 mass % to 0.003 mass % as converted to silica. When the amount of addition exceeds the foregoing range, the water-repellency is supposed to improve because the water-repellent component increases. However, when the amount of addition too exceeds over the foregoing range, transferring tends to occur because the water-repellent components present more than the number of limited reaction sites stay as surplus being adsorbed to the substrate by a weak intermolecular force without chemical coupling. When the amount of addition is under the foregoing range, the water-repellency degrades because the absolute quantity of the water-repellent components decreases.

The concentration of the acid is determined by means of composition ratio factor between the silicon alkoxide or its hydrolyzate and the silane compounds with fluoroalkyl group. When the acid concentration becomes large, a condensation reaction of the silicon alkoxide or its hydrolyzate in the solution initiates easily and a pot life of the solution shortens. When the acid concentration becomes small, it becomes unable to fully maintain the durability or the mechanical strength of the film because the condensation reaction of the silicon alkoxide or its hydrolyzate in the solution hardly initiates.

The concentration of the water is also determined by means of composition ratio factor between the silicon alkoxide or its hydrolyzate and the silane compounds with fluoroalkyl group. The smaller the water concentration, the easier the condensation reaction. When the water concentration becomes large, a hydrolysis reaction of the silicon alkoxide or its hydrolyzate in the solution is accelerated and a dehydration condensation reaction initiates easily. Accordingly, it causes disadvantages such that the pot life of the solution shortens and that unevenness in the film thickness generates in the drying process after the coating process.

Any method publicly known as coating method may be arbitrarily employed for applying the water-repellent liquid coating composition over the surface of the substrate. The drying process may be proceeded at room temperature or, of course, at a heated temperature of up to about 150 °C. In order to raise the compactness of the water-repellent film after drying, a calcinations at the temperature of up to about 300 °C may be employable.

In the following examples are described several preferred embodiments to concretely illustrate the invention, however, it is to be understood that the invention is not intended to be limited to the specific embodiments.

### EXAMPLES

The water-repellent films were formed after preparing the water-repellent liquid coating compositions by dissolving a silicon alkoxide or its hydrolyzate, a silane compound with fluoroalkyl group and an acid, i.e. hydrochloric acid in a solvent by applying the coating compositions on the surface of the glass sheets, followed by drying. The liquid coating compositions were both the water-repellent liquid coating compositions within the scope of the present invention (Examples 1 to 3) and the water-repellent liquid coating compositions outside the scope of the present invention (Comparative Examples 1 to 4). Each liquid composition and results of transference-lessness evaluation of each Example or each Comparative Example are shown in Table 1. In Table 1, the number of handlings before the transferring occurred is described among parentheses.

**Table 1**

| | Liquid composition for water-repellent film | | | | | Transference-lessness (Numbers of handling) |
|---|---|---|---|---|---|---|
| | A | B | C | D | E | |
| Ex. 1 | 0.174 | 0.0022 | 0.227 | 1.3 | Residue | Practical (1000 times) |
| Ex. 2 | 0.113 | 0.00143 | 0.147 | 0.845 | Residue | Practical (1000 times) |
| Ex. 3 | 0.087 | 0.0022 | 0.02 | 1.94 | Residue | Practical (1000 times) |
| C. Ex. 1 | 0.029 | 0.0022 | 0.227 | 1.3 | Residue | Bad (10 times) |
| C. Ex. 2 | 0.029 | 0.0055 | 0.227 | 1.3 | Residue | Bad (once) |
| C. Ex. 3 | 0.29 | 0.0055 | 0.227 | 1.3 | Residue | Bad (10 times) |
| C. Ex. 4 | 0.029 | 0.01 | 0.227 | 1.3 | Residue | Bad (once) |

In Table 1, "Ex." means Example; "C." means Comparative; "A" means silicon alkoxide or its hydrolyzate (mass % as converted to silica); "B" means silane compounds with fluoroalkyl group (mass % as converted to silica); "C" means hydrochloric acid (mol/liter); "D" means water (mass %); "E" means alcoholic solvent; and "Numbers of handling" means Numbers of handling before transferring occurred.

The evaluation of the transference-lessness, i.e. whether there were any transferring occurred or not, was conducted as follows:
1. A chuck (suction disc) composed of fluorocarbon rubber and having a diameter of 80 mm ϕ was pressed tightly with the adsorbing pressure of - 85 kPa to the water-repellent film formed over the surface of a glass sheet as a sample having a mass of about 4 kg.
2. The sample was maintained vertically being adsorbed by the chuck for 30 seconds and the surface where the chuck adsorbed was loaded. In the foregoing procedure, every adsorption was not conducted at the same place but usually a new water-repellent surface was adsorbed by the chuck and loaded.
3. The chuck was adsorbed under the same condition to a washed surface (washed by a cleaning method with the use of cerium oxide-based abrasive) of another ordinary glass sheet after every arbitrary turns of the foregoing procedure. With regard to the ordinary glass sheet, every adsorption was also not conducted at the same place.
4. Then, water was applied to the surface of the ordinary glass sheet that was pressed by the chuck, and the water-repellency was evaluated by observing how much the water was repelled at the trace of the chuck.
5. Further, whether the transferring occurred or not was determined by an assay of the water-repellent component over the surface of the ordinary glass sheet in accordance with X-ray Photoelectron Spectroscopy analysis (XPS).
6. When the water was not repelled in the shape of the chuck, or when the water-repellent component was not detected over the surface of the ordinary glass sheet, an évaluation of no transferring was decided. When the water was repelled in the shape of the chuck, or when the water-repellent component was detected over the surface of the ordinary glass sheet, an evaluation of transferring occurred was decided.

In Examples 1 to 3 within the scope of the present invention, no transferring occurred after each 1000 times of handling. In Comparative Example 1 with poor amounts of silicon alkoxide or its hydrolyzate, on the contrary, a slight transferring occurred after handling once and a certain transferring was recognized after ten times of handling. Further, in Comparative Example 2 and Comparative Example 4 both with poor amounts of silicon alkoxide or its hydrolyzate and excess of silane compounds containing fluoroalkyl group, a certain transferring was recognized after handling only once. Furthermore, in Comparative Example 3 with excess of silicon alkoxide or its hydrolyzate and excess of silane compounds containing fluoroalkyl group, a slight transferring occurred after handling once and a certain transferring was recognized after ten times of handling.

As the foregoing description, a water-repellent film with the use of a water-repellent liquid composition within the scope of the present invention clearly revealed a different quality in the viewpoint of a transference-lessness as compared with a water-repellent film outside the scope of the present invention.

Still further, the evaluation of the transference-lessness, i.e. whether there were any transferring occurred or not, was conducted concerning water-repellent films with other component as Reference Examples:
Reference Example 1: Forming a silica undercoat film with the use of a chlorosilane and an alcohol solvent, followed by a bilayer type film forming with the coating of a water-repellent component FAS-Cl (corresponds to perfluorooctyl ethyltrichlorosilane).
Reference Example 2: Film-forming with the coating of dimethylsiloxane water-repellent component under acid.

Regarding each of Reference Examples 1 and 2, a certain transferring was recognized before ten times of handling.

According to the present invention, by specifying a water-repellent coating liquid composition comprising silicon alkoxide or its hydrolyzate, silane compounds containing fluoroalkyl group, and acid dissolved in a solvent to the foregoing predetermined range, and by revealing the transference-lessness, a property preventing a transferring of a water-repellent component, to the water-repellent film itself, any countermeasures against transference such as adhering a tacky film or applying a surfactant becomes unnecessary. As a result, an effect of inhibiting both the increase of the numbers of the process or the apparatuses and the augmentation of the environmental load can be obtained.

While there has been described what is at present considered to be the preferred embodiment of the invention, it will be understood that various modifications may be made therein, and it is intended to cover in the appended claims all such modifications as fall within the true spirit and scope of the invention.

## Claims

1. A transference-less water-repellent film inhibiting an occurrence of transferring a water-repellent component via a glass handling tool that contacts with the water-repellent film formed by applying a water-repellent coating liquid composition comprising silicon alkoxide or its hydrolyzate, silane compounds containing fluoroalkyl group, and acid dissolved in a solvent over the surface of a substrate and by drying, wherein the water-repellent coating liquid composition comprises:
(A) silicon alkoxide or its hydrolyzate in an amount of from 0.05 mass % to 0.20 mass % as converted to silica;
(B) silane compounds with fluoroalkyl group in an amount of from 0.001 mass % to 0.003 mass % as converted to silica;
(C) acid in an amount of (from 0.01 to 0.30)/(degree of acidity) mol/liter;
(D) water in an amount of from 0.5 mass % to 2.0 mass %; and
(E) alcoholic solvent in an amount of the residue.

2. The transference-less water-repellent film according to Claim 1, wherein the concentration of the fluorine at the surface of said water-repellent film is from 0.8 to 1.2 expressed as a ratio between fluorine atoms and silicon atoms.

3. An article covered by said transference-less water-repellent film according to Claim 1 or Claim 2.
